# EUROPEAN PATENT APPLICATION

(11) **EP 2 660 124 A1**
(43) Date of publication of application: **06.11.2013**
(21) Application number: 12166255.5
(22) Date of filing: 01.05.2012
(51) Int. Cl.: B62D 1/183, B62D 1/184

(54) **A steering column arrangement**

(71) Applicant: Autoliv Development AB, 447 83 Vårgårda (SE)
(72) Inventor: Rydsmo, Erik, 466 95 Sollerbrunn (SE); Hallenbert, Anders, 447 93 Vargarda (SE)
(74) Representative: Beattie, Alex Thomas Stewart

(57) **Abstract**

A steering column arrangement, comprising: a steering column mounting member (17) , adapted to receive and retain a steering column (2); an attachment arrangement for attachment to a vehicle, the steering column mounting member (17) being pivotably connected to the attachment arrangement; a locking arrangement, operable selectively to lock the steering column mounting member (17) pivotably with respect to the attachment arrangement; and a locking control, which may be operated to control the locking arrangement, wherein: the steering column mounting member may pivot with respect to the attachment arrangement through a range of movement having first and second endpoints; first and second locking regions (5, 7) are defined, within the range of motion, at least one of the locking regions comprising a locking range of at least 5°; the locking arrangement is operable to lock the steering column mounting member (17) pivotably with respect to the attachment arrangement at any position within either of the two locking regions (5, 7), when the locking control is operated; and a sub-range (8) is defined within the range of motion, between the first and second locking regions (5, 7), within which, when the locking control is operated, the locking arrangement will not lock the column mounting member (17) pivotably with respect to the attachment arrangement.

## Description

THE PRESENT INVENTION relates to a steering column arrangement, and in particular to a steering column arrangement which allows a steering wheel to be moved significantly away from a normal driving position to allow easy entry into a vehicle.

In almost all modern vehicles it is possible to adjust the position of the steering wheel to suit the preferences or requirements of the driver. In particular, the effective length of the steering column, and the angle of tilt of the steering column, can be altered.

In many vehicles the steering column can be adjusted through a range of positions that are likely to be appropriate for driving the vehicle, and may also be tilted upwardly by a much larger amount into an "easy entry" position. With the steering wheel in this position, a driver may easily enter, or exit, the driving seat without being obstructed by the steering wheel. Once the driver has entered or left the driving seat, the steering wheel can be returned to a normal driving position.

This "easy entry" facility is likely to be useful for drivers who are pregnant, overweight or otherwise large, or who are physically disabled. The facility may also be necessary in certain types of vehicle where the steering wheel is large and/or positioned close to the driver's seat, for instance in some industrial/agricultural vehicles or in sports cars.

It is an object of the present invention to seek to provide an improved steering column system of this type.

Accordingly, once aspect of the present invention provides a steering column arrangement, comprising: a steering column mounting member, adapted to receive and retain a steering column; an attachment arrangement for attachment to a vehicle, the steering column mounting member being pivotably connected to the attachment arrangement; a locking arrangement, operable selectively to lock the steering column mounting member pivotably with respect to the attachment arrangement; and a locking control, which may be operated to control the locking arrangement, wherein: the steering column mounting member may pivot with respect to the attachment arrangement through a range of movement having first and second endpoints; first and second locking regions are defined, within the range of motion, at least one of the locking regions comprising a locking range of at least 5°; the locking arrangement is operable to lock the steering column mounting member pivotably with respect to the attachment arrangement at any position within either of the two locking regions, when the locking control is operated; and a sub-range is defined within the range of motion, between the first and second locking regions, within which, when the locking control is operated, the locking arrangement will not lock the column mounting member pivotably with respect to the attachment arrangement.

Advantageously, the locking arrangement comprises a sensing arrangement to sense, when the locking control is activated to lock the steering column mounting member in place, whether the steering column mounting member is within the sub-range.

Preferably, the sensing arrangement prevents the locking arrangement from being activated if it is sensed that the steering column mounting member is within the sub-range.

Conveniently, the sensing arrangement comprises a blocking member and a projection member, which move relative to one another when the steering column mounting member pivots with respect to the attachment arrangement; when the locking control is operated, the projection member moves towards the blocking member; when the steering column mounting member is within one of the locking regions within its range of motion, the projection member is not aligned with the blocking member, or is aligned with a gap, aperture or recess in the blocking member so that, when the locking control is operated, the projection member may move through or past the blocking member; and when the steering column mounting member is within the sub-range, the projection member is aligned with part of the blocking member so that, when the locking control is operated, the projection member contacts and is blocked by the blocking member.

Conveniently, the blocking member comprises one or more plates having one or more apertures through, or recesses formed in an edge thereof, at least one of which is aligned with the projection member when the steering column mounting arrangement is within either of the locking regions.

Advantageously, the one or more plates form part of the locking arrangement so that, when the steering column mounting member is locked in place with respect to the attachment arrangement, the one or more plates are clamped or biased against another component to prevent pivoting of the steering column mounting member with respect to the attachment arrangement.

Preferably, the locking arrangement comprises a clamp which moves to lock the steering column mounting arrangement with respect to the attachment arrangement, and wherein the projection member moves with the clamp so that, if the projection member is blocked by the projection member, the clamp is prevented from locking the steering column mounting arrangement with respect to the attachment arrangement.

Conveniently, the locking arrangement comprises a piston; fluid may escape from the piston through a check valve; and when the projection member moves through or past the blocking member, the check valve is forcibly opened to allow fluid to flow from the piston, so that the locking arrangement may move from the unlocked position to the locked position.

Conveniently, the sensing arrangement is electronic; the locking arrangement is activated by a locking signal; and if it is sensed that the steering column mounting member is within the sub-range, the sensing arrangement prevents the locking signal from being transmitted to the locking arrangement.

Advantageously, one of the locking regions comprises a locking point, rather than an extended locking range.

Preferably, both of the locking regions comprise extended ranges.

Conveniently, when the steering column arrangement is within the first locking region, this corresponds to a range of driving positions of a steering wheel attached to a steering column held by the steering column mounting member.

Advantageously, when the steering column arrangement is within the second locking region, this corresponds to an easy entry position, in which the steering wheel is significantly elevated with respect to normal driving positions, to allow a driver of the vehicle to enter or leave the driving seat.

Another aspect of the present invention provides a vehicle comprising a steering column arrangement according to any of the above.

In order that the present invention may be more readily understood embodiments thereof will now be described, by way of example, with reference to the accompanying drawings in which:
Figure 1 is a schematic view of a steering column;
Figure 2 shows components of a steering column arrangement embodying the invention;
Figure 3 is a schematic view of parts of the arrangement of figure 2;
Figures 4 - 10 show steps in the unlocking, movement and locking of the arrangement of figures 2 and 3; and
Figures 11 and 12 show the arrangement of figure 2 in alternative positions.

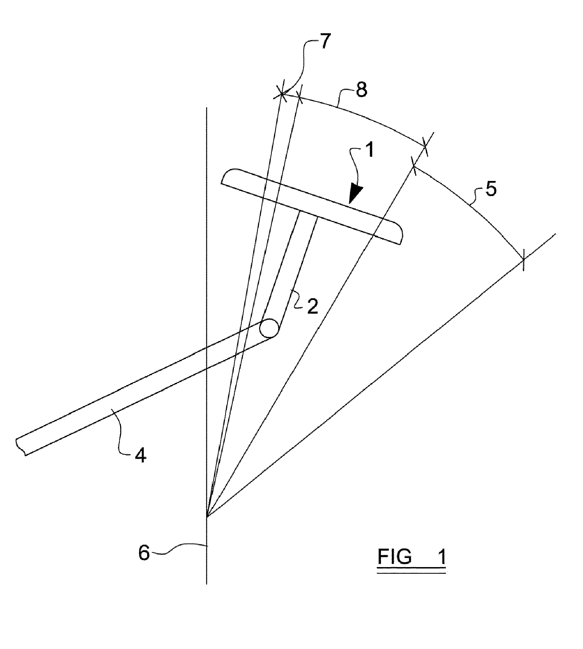

Referring firstly to figure 1, a schematic view is shown of a steering wheel 1 of a motor vehicle. The steering wheel 1 is attached to, and supported by, a steering column 2. At a pivot joint 3, the steering column is pivotally attached to a supporting member 4, which may be slidably attached to the chassis of the vehicle (not shown), to allow the effective length of the steering column 2 to be adjusted.

Three ranges of angles of tilt of the steering column 2 are shown in figure 1. In a first range 5, which preferably extends between around 32° to 52° from vertical 6, the steering wheel 1 is in a range of positions which are likely to be comfortable and appropriate for driving the vehicle.

In a second range 7, which preferably extends from around 6° to 8° from vertical 6, the steering wheel 1 is in an "easy entry" position, as described above, and is significantly elevated within the vehicle cabin as compared to the first range 5 of driving positions.

In an intermediate range 8, preferably extending between around 9° to 31° from vertical 6, the steering wheel 1 is between the range 5 of driving positions and the range 7 of easy entry positions.

It is desirable to be able to lock the steering column 2 pivotably with respect to the supporting member 4 at any position within the first range 5 and within the second range 7, but for it not to be possible to lock the steering column 2 in position at any point within the intermediate sub-range 8. This is because, within this sub-range 8, the steering wheel 1 is not in a suitable position for driving, nor is it sufficiently removed from the normal driving positions to allow easy entry into the driver's seat. For safety reasons, therefore, locking within this sub-range 8 should be prevented.

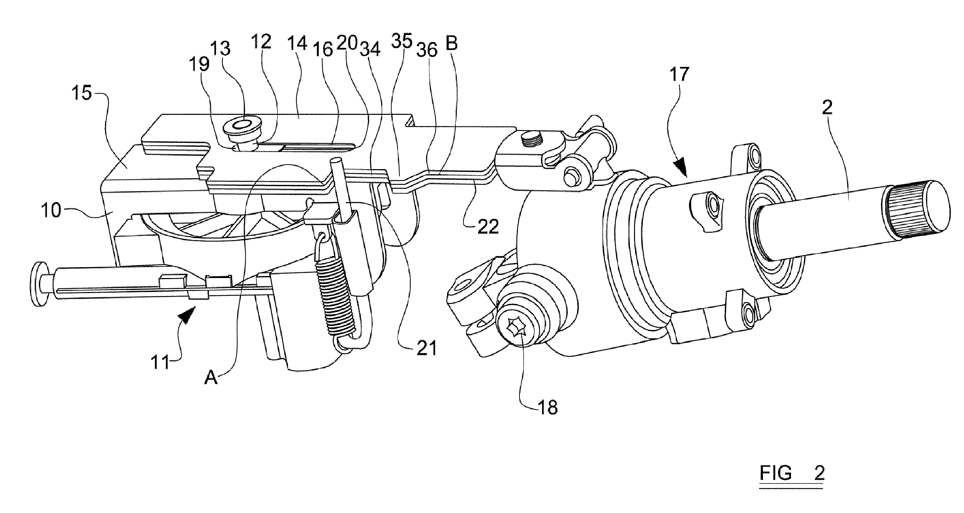

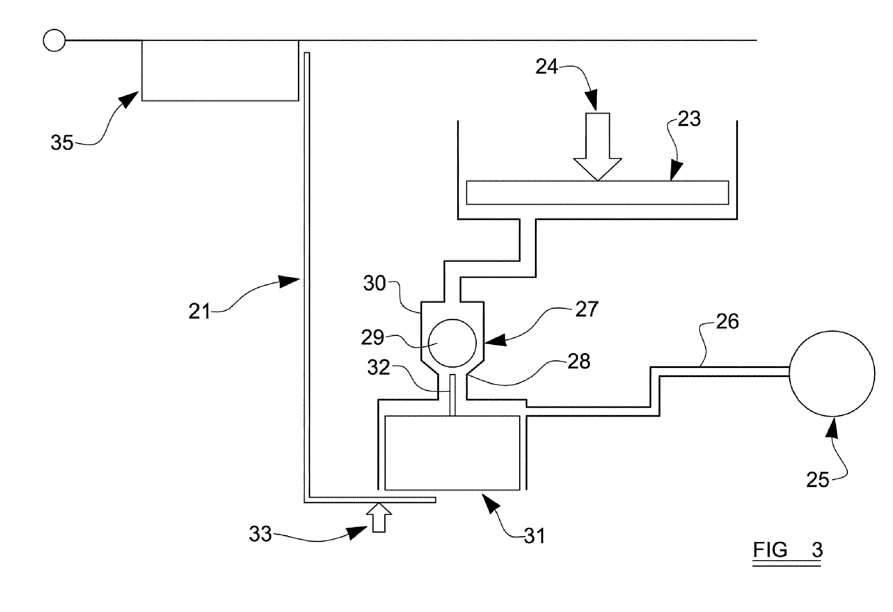

Referring to figure 2, a steering column arrangement 9 embodying the present invention is shown. A schematic diagram of some of the components of the steering column arrangement 9 is shown in figure 3.

Referring to figure 2, a cut-away view of a housing 10 is shown. The housing 10 is preferably fixed with respect to the chassis (not shown) of the vehicle, but it may be possible to slide the housing 10 back and forth with respect to the chassis to increase/decrease the effective length of the steering column.

A clamping arrangement 11 is contained within the housing 10, and will be described in greater detail below.

A clamping pin 12 of the clamping arrangement protrudes through a slot in the upper surface 15 of the housing 10, and terminates in a bolt head 13.

A plurality of friction plates 14 are positioned adjacent the upper surface 15 of the housing 10. Each of the friction plates 14 has an elongate slot 16 through which the clamping pin 12 passes.

The friction plates 14 are pivotally attached to a steering column mounting member 17, which is in turn pivotally attached at a pivot point 18 to the housing 10 (or another component that is itself attached to the housing 10). A steering column 2 is received and retained by the steering column mounting member 17, and a steering wheel (not shown) is mounted on the steering column 2.

As will be understood by the skilled person, the friction plates 14 may be slid back and forth with respect to the housing 10, so that the clamping pin 12 moves along the slots 16 formed in the friction plates 14. As this happens, the angle of tilt of the steering column mounting member 17 will change. In particular, in the configuration shown in figure 2, the clamping pin 12 is located at a first end 19 of the slot 16 in each friction plate 14. If the friction plates 14 are moved to the left (in the orientation shown in figure 2), so that the clamping pin 12 moves towards the second end 20 of the slot 16, the steering column mounting member 17 will tilt so as to be closer to being vertical.

The clamping arrangement 11 operates to hold the steering column mounting member 17 in a chosen orientation. The friction plates 14 are, in the default position, clamped between the upper surface of the housing 10 and the underside of the bolt head 13 that is carried by the clamping pin 12. In preferred embodiments a "spreader" or similar element may be attached to the underside of the bolt head 13 to exert force on the friction plates 14 over a greater area. This clamping action prevents the steering column mounting member 17 from pivoting. In order to alter the angle of pivot, the clamping arrangement 11 may be operated to release temporarily the clamping force exerted by the clamping pin 12, so that the steering wheel may be grasped and tilted by the user. As this occurs, the friction plates 14 will slide with respect to the housing 10 and the clamping pin 12. When the steering wheel 1 is in the new desired position, the clamping arrangement 11 can be operated to exert the clamping force once again.

In preferred embodiments, the clamping arrangement 11 exerts the clamping force when in its "rest" state, for instance through being spring-biased. When the clamping arrangement 11 is activated, the clamping force is temporarily reduced or removed.

The clamping arrangement 11 also includes an index pin 21 which, when the clamping arrangement 11 is in its rest position, lies adjacent to a side edge 22 of the friction plates 14. The side edge 22 is contoured, as will be described in more detail below.

Referring to figure 3, the clamping arrangement 11 comprises a locking piston 23, which is biased by a spring force 24 (or other biasing force) into a locked position (i.e. downwardly, in the arrangement shown in figure 3). When the locking piston 23 is in this locked position, the clamping pin 12 is pulled by the spring force 24 into a clamping position, so that the friction plates 14 are clamped between the inner and outer housings 10, as described above.

The locking piston 23 is connected to a main valve 25 via a series of conduits 26. Positioned between the main valve 25 and the locking piston 23 is a check valve 27. The check valve 27 includes a chamber 30 with a relatively narrow neck 28 and a floating ball 29 which may move within the chamber 30. When the ball 29 rests against the neck 28, the check valve 27 prevents air from flowing therethrough.

The check valve 27 is arranged so that, if the pressure in the locking piston 23 is higher than the pressure at the main valve 25, the ball 29 will be driven on to the neck 28, thus closing the check valve 28.

The skilled person will appreciate that the check valve may take any other suitable form, however.

Also connected to the main valve 28 is an index piston 31. The index piston 31 is provided between the main valve and the check valve 27.

The index piston 31 has an opening pin 32 attached thereto. The index piston 31 is biased into a first position (shown in figure 3), in which the opening pin 32 protrudes into the chamber 30 of the check valve 27 and prevents the ball 29 from resting on the neck 28 of the chamber 30. Therefore, when the index piston 31 is in the first position, the check valve 27 is forced into an "open" position.

The index valve 31 is biased into the first position by a spring force 33.

The index pin 21 is connected to the index piston 31. When the index valve 31 is in the first position, the index pin 21 is in its rest position, as shown in figure 2, in which the index pin 21 lies adjacent the edge 22 of the friction plates 14.

Referring again to figure 2, the range of positions that may be occupied by the index pin 21, with respect to the edge 22 of the friction plates 14, is roughly that between the points indicated by "A" and "B" in figure 2. Within this range, there is a first indentation 34 in the edge 22, a protrusion 35, and a second indentation 36, which is on the far side of the protrusion 35 from the first indentation 34.

The protrusion 35 is shown schematically in figure 3.

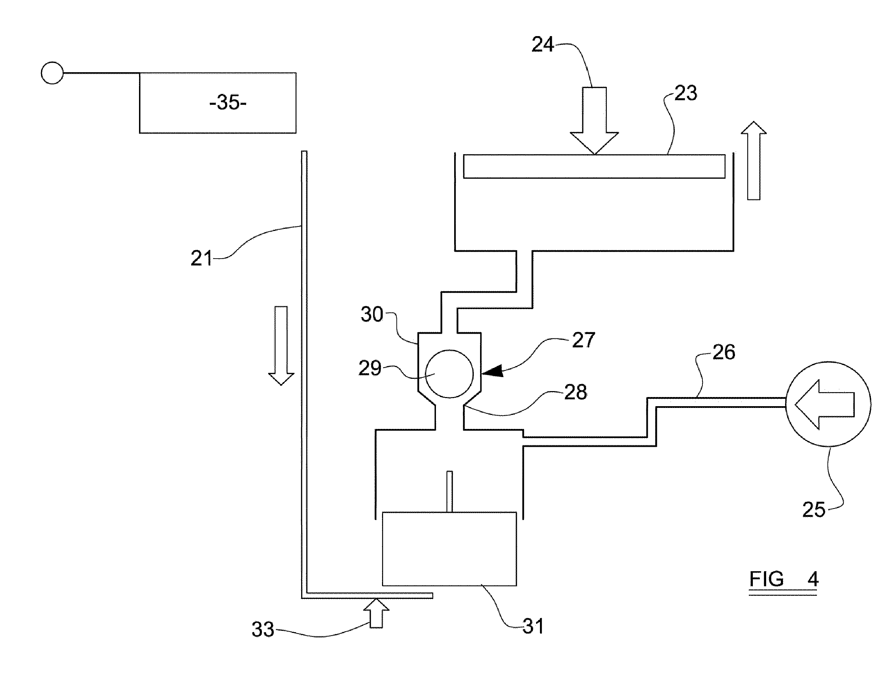

When the clamping arrangement 11 is to be activated, a locking control, which may be a switch or button in the vehicle's cabin, is operated. Compressed air is then introduced into the main valve 25, and the effect of this is shown schematically in figure 4.

Compressed air flows along the conduit 26, through the check valve 27, and into the locking piston 23. The locking piston 23 is driven upwardly (in the orientation shown in figure 4) against the spring biasing force 24, and this raises the clamping pin 12, thus "unlocking" the friction plates 14 with respect to the housing 10. The friction plates 14 may therefore slide relatively easily back and forth with respect to the housing 10, and the angle of tilt of the steering column mounting member 17 may therefore be adjusted by the user, by grasping and moving the steering wheel 1.

Compressed air introduced in the main valve 25 also flows into the index piston 31, thus driving the index piston 31 (and the index pin 21) downwardly (in the orientation shown in figure 4) against the spring biasing force 33. When this happens, the index pin 21 is drawn downwardly to a level below that of the friction plates 14, so that no part of the index pin 21 lies adjacent the edge 22 of the friction plates 14.

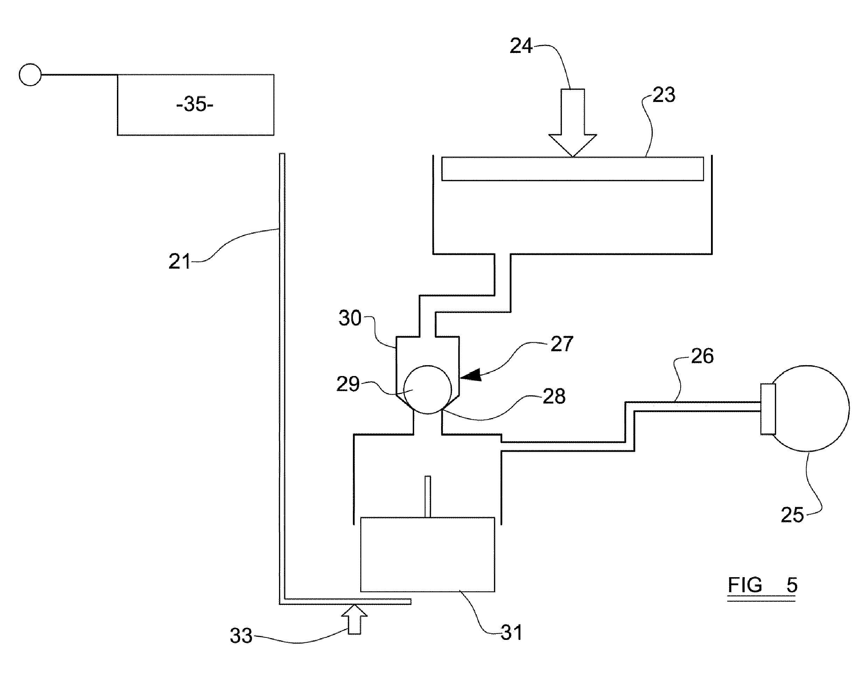

When the user releases the locking control, pressurised air is no longer introduced into the main valve 25. When this occurs, the pressure in the locking piston 23 will be higher than that in the conduit 26 which connects the main valve 25 to the check valve 27. The ball 29 of the check valve 27 will therefore be driven against the narrow neck 28 thereof, thus closing the check valve 27 as shown in figure 5. This means that compressed air will not be able to escape from the locking piston 23, and the clamping pin 12 will remain in the "open" position.

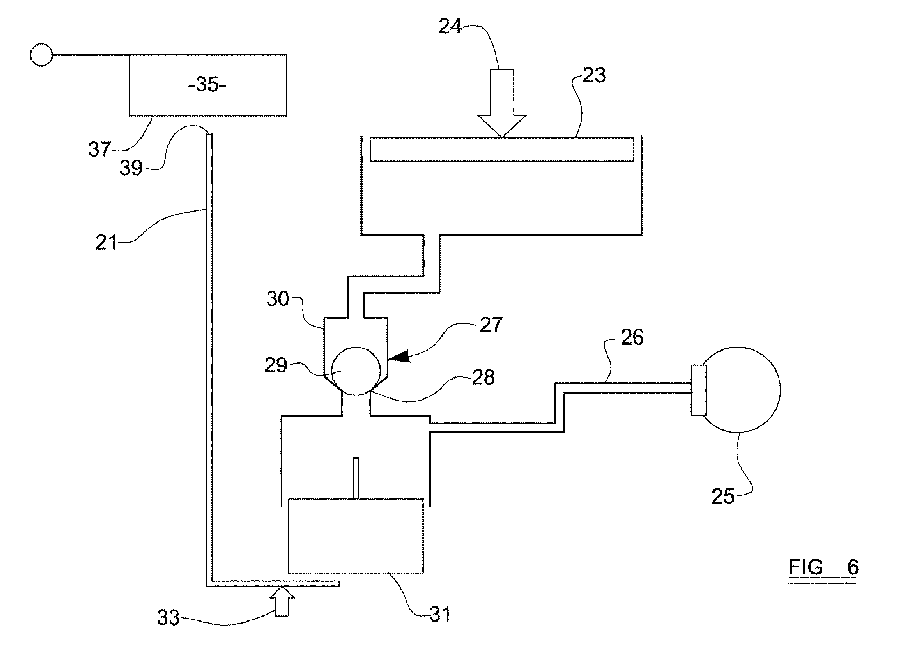

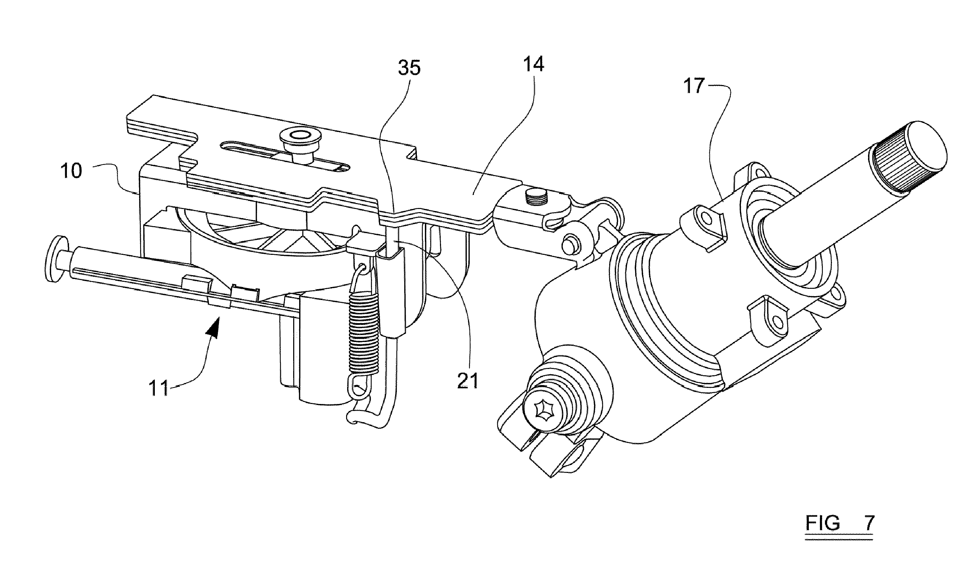

What happens next will depend on the position into which the steering column mounting member 17 has been moved. The user may have tilted the steering column mounting member 17 into a position where the index pin 21 is aligned with the protrusion 35 on the edge 22 of the friction plates 14 (as shown in figures 6 and 7).

In this case, when pressurised air no longer flows in through the main valve 25, the spring biasing force 23 will push the index piston 31 towards its default, closed position. However, if the index pin 21 is aligned with the protrusion 35, the tip 39 of the index pin 21 will contact the underside of the projection 35. This will therefore block the index pin 21 and prevent the index pin 21 from returning to its "rest" position, and this will also prevent the index piston 31 from returning to its default position. In this case, the locking piston 23 will remain in the "open" position, and it will still be possible to slide the friction plates 14 relatively easily with respect to the housing 10.

It will therefore be understood that, when the index pin 21 is aligned with the protrusion 35, it is not possible to lock the friction plates 14 in place with respect to the housing 10. The steering column mounting member 17 therefore cannot be locked in place.

The range of positions of the steering column mounting member 17 which correspond to the alignment of the index pin 21 and the projection 35 corresponds to the sub-range 8 shown in figure 1. It can therefore be understood how the interaction between the index pin 21 and the protrusion 35 prevents the steering wheel 1 from being locked in place within this undesired sub-range 8.

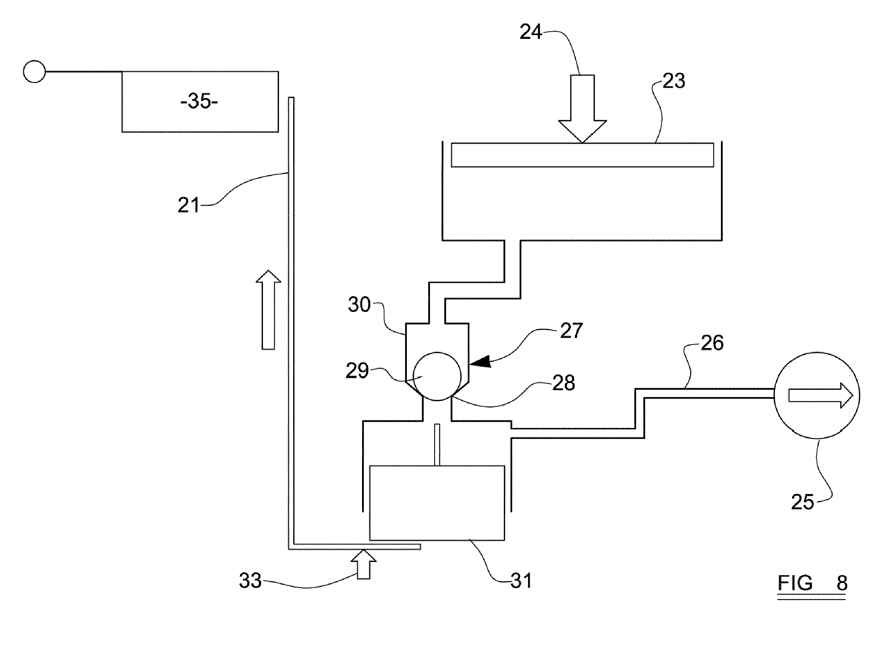

If the steering column mounting member 17 is moved to a position where the index pin 21 is not aligned with the projection 35, then the spring biasing force 33 that acts on the index piston 31 is able to return the index piston 31 to its default position, as the index pin 21 will not be blocked during this motion by the projection 35. This situation is shown in figure 8. As this occurs, air will be driven out of the main valve 25.

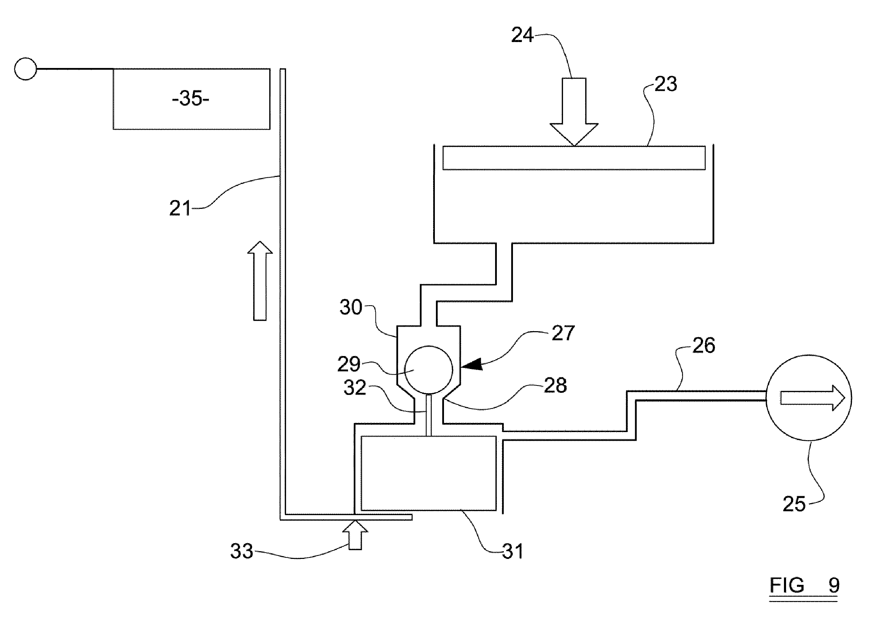

As the index piston 31 returns to its default position, the opening pin 32 protrudes into the chamber of the check valve 27, and lifts the floating ball 29 away from the narrowed neck 28 of this chamber 30. The check valve 27 is thereby forcibly opened, opening a flow path from the locking piston 23 through the check valve 27 and to the ambient atmosphere via the main valve 25. This situation is shown in figure 9.

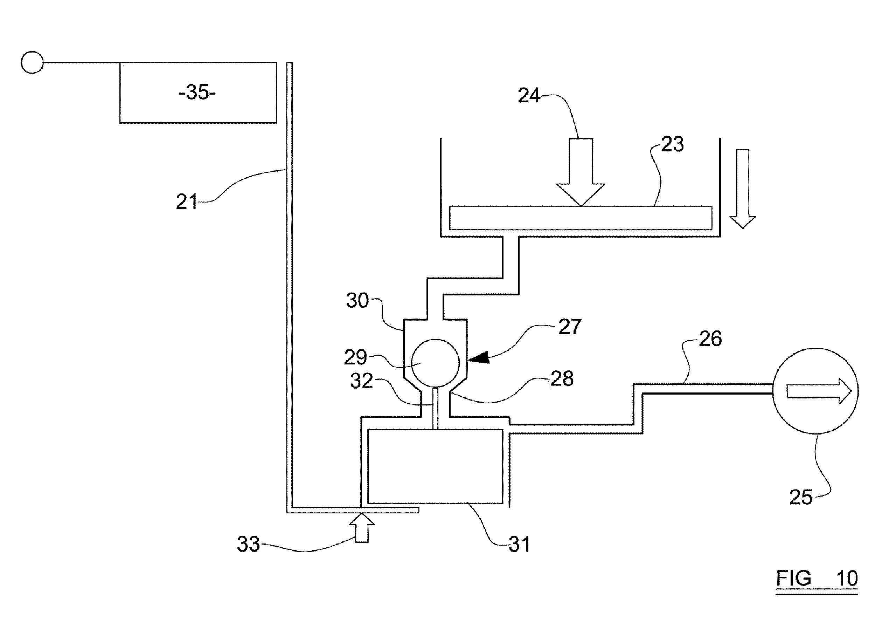

Once this flow path is opened, the locking piston 23 will return to its default position under the spring biasing force 24, and this situation is shown in figure 10. Once this position has been reached, the friction plates 14 are once again clamped between the bolt head 13 carried by the clamping pin 12 and the top surface of the housing 10. The steering column mounting member 17 is once again locked in place.

From the above it will be understood that the steering column mounting member 17 may only be locked in place when it is in certain positions, and may not be locked in position when its angle of inclination falls within a "forbidden" sub-range. If the user attempts to lock the steering column mounting member 17 in place when it is within the forbidden sub-range, the clamping arrangement 11 remains in the "unlocked" state until the steering column mounting member 17 is moved into a position where locking is permitted.

In figure 2, the steering column mounting member 17 is shown in its least elevated position (i.e. at the greatest possible angle from vertical), and this corresponds to the index pin 21 being located at a first end of the first indentation 34.

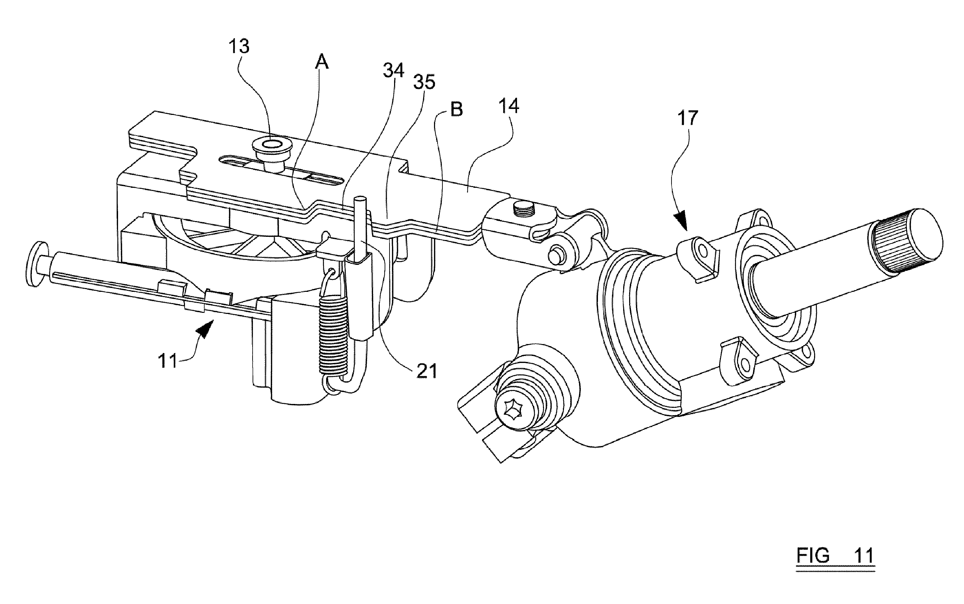

Figure 11 shows the steering column mounting member in a more elevated position (i.e. at a smaller angle from vertical), and this corresponds to the index pin 21 being at the other end of the first indentation 34.

It will be understood that the situation shown in figures 2 and 11 show the extremes of the range of motion permitted for normal driving positions, and these correspond to the first range 5 shown in figure 1. Preferably this range is not least 10°. More preferably this range is at least 20°. The range may be greater than 20°.

It is envisaged that the steering column may, in some vehicles, be relatively long, and in these cases the range of permitted driving positions for the steering column may be less than 10°, as a small angular movement will lead to a large change in the position of the steering wheel itself. In these circumstances the range of permitted driving positions may be as little as 5° or even less, although movement through this angle should correspond to a linear movement of the steering wheel itself of at least 5cm.

As discussed above, positions where the index pin 21 aligns with the projection 35 correspond to the second, forbidden sub-range 8 shown in figure 1. Preferably this sub-range 8 extends over at least 10°, and more preferably is over 20°.

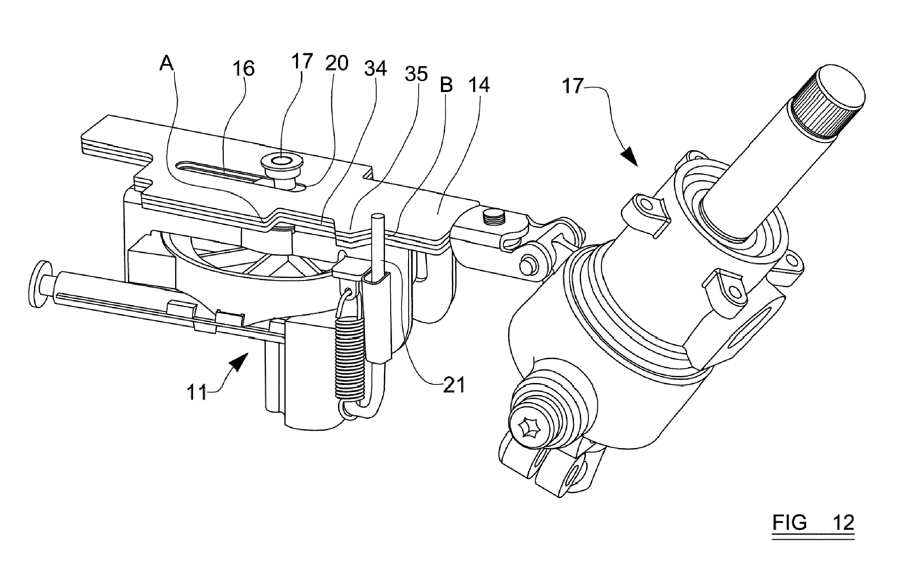

Finally, figure 12 shows the steering column mounting member 17 in the elevated "easy entry" position. In this position, the index pin 21 lies in the second indentation 36, on the far side of the projection 35 from the indentation 34. This position corresponds to the second permitted range of positions 7 shown in figure 1, i.e. those for "easy entry" positions.

In preferred embodiments, the steering column mounting member 17 may only be locked within a relatively narrow range of easy entry angles, and further elevation of the steering column mounting member 17 is prevented by the clamping pin 12 reaching the second end 20 of the slot 16 formed in the friction plates 14. The easy entry positions may fall within a small range, for instance of 2° - 3°, and in some embodiments may effectively comprise a locking "point" with no significant range.

It will be appreciated that the positions and extents of the locking ranges 5, 7, and the range 8 of positions in which locking is not permitted, may be varied simply by changing the profile of the edge 22 of the friction plates 14. Indeed, more locking regions and permitted regions can be introduced in this way. The invention is therefore flexible in the way embodiments can be configured.

The skilled person will understand that there are other mechanisms that can be used to allow the steering column to be locked at any position within one or more locking ranges, but not to be locked at any position within an intermediate sub-range. For instance, other mechanical arrangements could be used instead.

As an alternative to the these embodiments, an electronic arrangement may be used to sense the position of the steering column, for instance one or more linear and/or rotary encoders. In these embodiments, the locking arrangement may be activated through an electronic signal. When it is sensed that the steering column is within a "forbidden" range, the signal may be inhibited or blocked. The skilled person will readily appreciate how this may be arranged.

It will be understood that embodiments of the present invention provide a robust and reliable system for allowing locking of the steering wheel 1 in a useful range of driving positions, and in an elevated easy entry position, but does not allow locking of the steering wheel 1 in intermediate positions. Importantly, embodiments of the invention also allow the steering wheel 1 to be locked at any point within a continuous range of driving positions, and are not restricted to the locking of the steering wheel 1 in discrete "stepped" increments.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

**1.** A steering column arrangement, comprising:
a steering column mounting member, adapted to receive and retain a steering column;
an attachment arrangement for attachment to a vehicle, the steering column mounting member being pivotably connected to the attachment arrangement;
a locking arrangement, operable selectively to lock the steering column mounting member pivotably with respect to the attachment arrangement; and
a locking control, which may be operated to control the locking arrangement, wherein:
the steering column mounting member may pivot with respect to the attachment arrangement through a range of movement having first and second endpoints;
first and second locking regions are defined, within the range of motion, at least one of the locking regions comprising a locking range of at least 5°;
the locking arrangement is operable to lock the steering column mounting member pivotably with respect to the attachment arrangement at any position within either of the two locking regions, when the locking control is operated; and
a sub-range is defined within the range of motion, between the first and second locking regions, within which, when the locking control is operated, the locking arrangement will not lock the column mounting member pivotably with respect to the attachment arrangement.

**2.** A steering column arrangement according to claim 1, wherein the locking arrangement comprises a sensing arrangement to sense, when the locking control is activated to lock the steering column mounting member in place, whether the steering column mounting member is within the sub-range.

**3.** A steering column arrangement according to claim 2, wherein the sensing arrangement prevents the locking arrangement from being activated if it is sensed that the steering column mounting member is within the sub-range.

**4.** A steering column arrangement according to claim 1 or 2, wherein:
the sensing arrangement comprises a blocking member and a projection member, which move relative to one another when the steering column mounting member pivots with respect to the attachment arrangement;
when the locking control is operated, the projection member moves towards the blocking member;
when the steering column mounting member is within one of the locking regions within its range of motion, the projection member is not aligned with the blocking member, or is aligned with a gap, aperture or recess in the blocking member so that, when the locking control is operated, the projection member may move through or past the blocking member; and
when the steering column mounting member is within the sub-range, the projection member is aligned with part of the blocking member so that, when the locking control is operated, the projection member contacts and is blocked by the blocking member.

**6.** A steering column arrangement according to claim 5, wherein the blocking member comprises one or more plates having one or more apertures through, or recesses formed in an edge thereof, at least one of which is aligned with the projection member when the steering column mounting arrangement is within either of the locking regions.

**7.** A steering column arrangement according to claim 6 wherein the one or more plates form part of the locking arrangement so that, when the steering column mounting member is locked in place with respect to the attachment arrangement, the one or more plates are clamped or biased against another component to prevent pivoting of the steering column mounting member with respect to the attachment arrangement.

**8.** A steering column arrangement according to one of claims 5 to 7, wherein the locking arrangement comprises a clamp which moves to lock the steering column mounting arrangement with respect to the attachment arrangement, and wherein the projection member moves with the clamp so that, if the projection member is blocked by the projection member, the clamp is prevented from locking the steering column mounting arrangement with respect to the attachment arrangement.

**9.** A steering column arrangement according to any one of claims 4 to 8 wherein:
the locking arrangement comprises a piston;
fluid may escape from the piston through a check valve; and
when the projection member moves through or past the blocking member, the check valve is forcibly opened to allow fluid to flow from the piston, so that the locking arrangement may move from the unlocked position to the locked position.

**10.** A steering column arrangement according to one of claims 1 to 3, wherein:
the sensing arrangement is electronic;
the locking arrangement is activated by a locking signal; and
if it is sensed that the steering column mounting member is within the sub-range, the sensing arrangement prevents the locking signal from being transmitted to the locking arrangement.

**11.** A steering column arrangement according to any preceding claim, wherein one of the locking regions comprises a locking point, rather than an extended locking range.

**12.** A steering column arrangement according to one of claims 1 to 10, wherein both of the locking regions comprise extended ranges.

**13.** A steering column arrangement according to any preceding claim wherein, when the steering column arrangement is within the first locking region, this corresponds to a range of driving positions of a steering wheel attached to a steering column held by the steering column mounting member.

**14.** A steering column arrangement according to claim 13 wherein, when the steering column arrangement is within the second locking region, this corresponds to an easy entry position, in which the steering wheel is significantly elevated with respect to normal driving positions, to allow a driver of the vehicle to enter or leave the driving seat.

**15.** A vehicle comprising a steering column arrangement according to any preceding claim.
